# EUROPÄISCHE PATENTSCHRIFT

(11) **EP 3 759 594 B1**
(45) Veröffentlichungstag und Bekanntmachung des Hinweises auf die Patenterteilung: **17.12.2025**
(21) Anmeldenummer: 19708827.1
(22) Anmeldetag: 28.02.2019
(51) Int. Cl.: G06F 9/448, G06F 9/455

(54) **VERFAHREN ZUM AUSFÜHREN EINES COMPUTERPROGRAMMES IN EINEM RECHNERVERBUND ZUM STEUERN EINES MIKROSKOPS**
METHOD FOR EXECUTING A COMPUTER PROGRAM IN A COMPUTER NETWORK FOR CONTROLLING A MICROSCOPE
PROCÉDÉ POUR EXÉCUTER UN PROGRAMME INFORMATIQUE DANS UN RÉSEAU D'ORDINATEURS POUR COMMANDER UN MICROSCOPE

(30) Priorität: 01.03.2018 DE 102018104752
(43) Veröffentlichungstag der Anmeldung: 06.01.2021
(73) Patentinhaber: Carl Zeiss Microscopy GmbH, 07745 Jena (DE); Carl Zeiss AG, 73447 Oberkochen (DE)
(72) Erfinder: SCHULTHEISS, Christian, 80339 München (DE); SCHNEIDER, Stefan, 83410 Laufen (DE); BUTNARU, Daniel, 81479 München (DE); BHATTIPROLU, Sreenivas, DUBLIN, California 94568 (US); FICHTL, Bernhard, 82008 Unterhaching (DE); RIEDELSHEIMER, Norbert, 86161 Augsburg (DE); MOSIG, Benjamin, 81677 München (DE)
(74) Vertreter: Loritz, Rainer
(86) Internationale Anmeldenummer: PCT/EP2019/055069
(87) Internationale Veröffentlichungsnummer: WO 2019/166589

(56) Entgegenhaltungen:
- US-A1- 2017 163 518
- ANONYMOUS: "GitHub - CenturyLinkLabs/dray: An engine for managing the execution of container-based workflows.", 16 February 2016 (2016-02-16), XP055591756, Retrieved from the Internet <URL:https://web.archive.org/web/20160216145257/https://github.com/CenturyLinkLabs/dray> [retrieved on 20190524]

## Beschreibung

Die Erfindung betrifft die Ausführung von Computerprogrammen in einem Rechnerverbund (engl. "computer network"), insbesondere zum Steuern eines Mikroskops. Ein solcher Rechnerverbund kann auch als Rechnerwolke (engl. "computing cloud") bezeichnet werden. Selbstverständlich betrifft die Erfindung nicht nur einen Rechnerverbund, der von einem Dienstleister bereitgestellt wird ("public cloud"), sondern auch einen Rechnerverbund, der ausschließlich für die das Computerprogramm ausführende Organisation betrieben wird ("private cloud") oder Mischformen davon.

Ein Computerprogramm ist im Sinne der Erfindung eine Abfolge von Rechenanweisungen, die insbesondere Funktionsaufrufe sein können.

In einem Rechnerverbund können physikalische oder virtuelle Rechner miteinander verbunden sein, beispielsweise über ein Netzwerk wie "Ethernet" (IEEE 802.3) und "WLAN" (IEEE 802.11) oder Bussysteme wie "CAN" (ISO 11898),
"Firewire" (IEEE 1394). Ein virtueller Rechner kann beispielsweise über eine virtuelle Netzwerkschnittstelle angebunden sein.

In einem Rechnerverbund können die einzelnen Funktionen eines Computerprogramms als separat ausführbare Programmdateien (nachfolgend auch als ausführbare Module bezeichnet) in unterschiedlichen Ausführungsumgebungen ausgebildet sein, beispielsweise genau eine Funktion (und damit ein ausführbares Modul) pro Ausführungsumgebung. Ein Aufruf der Funktion startet dann das zugehörige ausführbare Modul in seiner Ausführungsumgebung. Eine Ausführungsumgebung kann dabei eine virtuelle Maschine oder ein (virtueller) Container sein.

Eine virtuelle Maschine enthält neben dem ausführbaren Modul einschließlich eventueller Bibliotheksdateien zum dynamischen Binden (engl. "linking") mit der ausführbaren Datei insbesondere auch einen Betriebssystemkern. Eine virtuelle Maschine kann weitere Dateien oder sonstige Daten (beispielsweise eine Datenbank) enthalten, die zur Ausführung des Moduls notwendig sind, und simuliert das Vorhandensein eines Rechners durch Software. Dieser Rechner ist virtuell.

Ein Container enthält hingegen keinen Betriebssystemkern. Die Virtualisierung geschieht hier auf der Ebene der Anwendungsumgebung, also der Laufzeitumgebung des ausführbaren Moduls. Module, die auf demselben Rechner in verschiedenen Containern laufen, nutzen denselben Betriebssystemkern - den des Rechners. Die übrigen Ressourcen des Rechners können zwischen mehreren Containern aufgeteilt oder von diesen gemeinsam genutzt werden. Die Container sind jedoch voneinander und grundsätzlich vom Rest des Rechners isoliert. Aus einem Container heraus kann nur auf definierte Ressourcen des Rechners zugegriffen werden, beispielsweise auf bestimmte Dateien oder Verzeichnisse. Diese gegenüber anderen Containern und anderen Systemressourcen abgeschottete Umgebung wird als Namensraum (engl. "namespace") bezeichnet. Die in einem Namensraum enthaltenen Bibliotheken, Dateien und sonstigen Daten können ausschließlich von dem (oder den) in demselben Namensraum enthaltenen Modul(en) genutzt werden. Von Containern außerhalb des Namensraums sind sie hingegen nicht erreichbar.

Container und Namensräume werden beispielsweise vom Betriebssystem Linux über die Schnittstellen "LXC", "LXD" oder "runc" und sogenannte Steuergruppen (engl. "control groups", cgroups) bereitgestellt. Eine Verwaltung von Containern wird beispielsweise von der Software "Docker" (http://ww.docker.com) bereitgestellt.

Im Stand der Technik offenbart das Projekt "dray" (http://dray.it) eine automatisierte Ausführung eines Computerprogramms in einem Rechnerverbund mittels per Docker verwalteten Containern. Dabei werden mehrere Funktionen, die in verschiedenen Containern in Form einer jeweiligen ausführbaren Programmdatei enthalten sind, ähnlich einer anonymen Pipe sequentiell aufgerufen. Der Rückgabewert jeder aufgerufenen Funktion wird als Eingabe-Parameter an die darauffolgende Funktion übergeben. Zu diesem Zweck werden zurückgegebene Werte wahlweise a) von dem Standardausgabekanal (stdout) oder b) von dem Standardfehlerausgabekanal (stderr) oder c) aus einer vorab namentlich spezifizierten Datei eingelesen und automatisch der unmittelbar darauffolgenden Funktion über deren Standardeingabekanal (stdin) übergeben. Die Container werden nach Bedarf (also beispielsweise bei Aufruf einer enthaltenen Funktion) automatisch gestartet und wieder beendet. Siehe hierzu auch: Anonymous: "GitHub - CenturyLinkLabs/dray: An engine for managing the execution of container-based workflows", 16. Februar 2016 (2016-02-16), gefunden im Internet: URL:https://web.archive.org/web/20160216145257/ https:// github.com/CenturyLinkLabs/dray

Weiters offenbart US 2017/163518 A1 die Definition von virtuellen Maschinen-basierten Workflows in einer Cloud-Umgebung, sowie Eingabe- und Ausgabeparameter von Elementen in einem Workflow.

Die Kapselung von Funktionen als ausführbar Module in isolierten Containern hat gegenüber einer anonymen Pipe mehrere Vorteile. Neben erhöhter Sicherheit, Stabilität und Skalierbarkeit ist auch eine leichtere Wartung eines Modules einschließlich seiner Abhängigkeiten (Bibliotheken) unabhängig von den Abhängigkeiten anderer Module möglich.

Die bekannte Lösung hat jedoch den Nachteil, dass nur starre Abläufe möglich sind. Die ausführbaren Computerprogramme sind also unflexibel.

Der Erfindung liegt die Aufgabe zugrunde, ein Verfahren der eingangs genannten Art und eine entsprechende Vorrichtung zu verbessern, so dass Computerprogramme flexibler gestaltet und ausgeführt werden können. Gemäß einem besonderen Aspekt soll zudem die Entwicklung von Computerprogrammen vereinfacht und beschleunigt werden.

Diese Aufgabe wird gelöst durch ein Verfahren, welches die in Anspruch 1 angegebenen Merkmale aufweist, und durch eine Vorrichtung, welche die in Anspruch 11 angegebenen Merkmale aufweist.

Vorteilhafte Ausgestaltungen der Erfindung sind in den Unteransprüchen angegeben. Im Rahmen der Erfindung wurde erkannt, dass mehr Flexibilität in der Ausführung eines Computerprogrammes in einem Rechnerverbund dadurch erreicht werden kann, dass bei mindestens einem Funktionsaufruf der betreffenden Funktion mehrere Rückgabewerte von mehreren vorangehenden Funktionsaufrufen als separate Parameter übergeben werden können. Dabei wird vorzugsweise für jeden Funktionsaufruf ein Container als Ausführungsumgebung geladen und nach Beendigung der aufgerufenen Funktion wieder entladen.

Während beispielsweise nach dem Stand der Technik ein Container nach dem Beenden einer ersten Funktion und dem Einlesen ihres Rückgabewerts geschlossen und der eingelesene Wert ausschließlich in den Standardeingabekanal einer zweiten Funktion kopiert und dann verworfen wird, erfordert die hier vorgeschlagene flexiblere Form eine Zwischenspeicherung jedes Rückgabewerts, entweder explizit in einer im Computerprogramm angegebenen Variablen oder, wenn die erste Funktion im auszuführenden Computerprogramm unmittelbar als Parameter (Funktionsargument) im Aufruf einer zweiten Funktion enthalten ist, implizit in einem für explizite Instruktionen des Computerprogramms nicht zugänglichen Speicher. Dies ermöglicht deutlich komplexere und flexiblere Funktionsaufrufe.

Anderen in dem Computerprogramm aufgerufenen Funktionen können entweder ein oder mehrere Parameter (Funktionsargumente) übergeben werden oder sie sind parameterlos. Jede Funktionen kann entweder einen oder mehrere Werte zurückgeben oder sie ist rückgabewertfrei. Ein von einer Funktion zurückgegebener Wert kann explizit als Inhalt einer Variablen zwischengespeichert und/oder unmittelbar innerhalb eines Funktionsaufrufs als Parameter einer Funktion übergeben werden. Inhalte von Variablen können bei späteren Funktionsaufrufen als Parameter übergeben werden.

Im Rahmen der Erfindung wurde auch erkannt, dass mehr Flexibilität in der Ausführung eines Computerprogrammes in einem Rechnerverbund dadurch erreicht werden kann, dass das Computerprogramm neben Funktionsaufrufen auch Anweisungen zur Steuerung des Programmflusses aufweist, beispielsweise Anweisungen zur bedingten Ausführung von Programmabschnitten und Sprunganweisungen (bedingt oder unbedingt).

Gemäß einem besonderen Aspekt wurde im Rahmen der Erfindung außerdem erkannt, dass die Entwicklung von Computerprogrammen vereinfacht und beschleunigt werden kann, indem in dem Rechnerverbund, in dem das Computerprogramm auszuführen ist, eine Datenbank bereitgestellt wird, welche die Ausführungsumgebungen der Funktionsmodule und auch deren Schnittstellendefinitionen enthält, wobei die Schnittstellendefinition einer Ausführungsumgebung (beziehungsweise des in ihr enthaltenen Moduls) den Datentyp des Ergebniswerts des enthaltenen Moduls und auch den oder die Datentypen des Parameters beziehungsweise der Parameter des enthaltenen Moduls umfasst.

Auf diese Weise kann eine statische Typisierung von Variablen und auch Funktionsargumenten realisiert und überprüft werden. Dadurch können Laufzeitfehler (engl. "run-time errors") zugunsten von Übersetzungszeitfehlern (engl. "compile-time errors") vermieden werden, was den gesamten Entwicklungsablauf vereinfacht und beschleunigt. Im Stand der Technik können falsche Datentypen erst zur Laufzeit erkannt werden, so dass die Korrekturzyklen deutlich länger sind.

Die Datenbank, die die Ausführungsumgebungen enthält, kann vorteilhafterweise derart bereitgestellt werden, dass sie neben der ersten Schnittstellendefinition mit den Datentypen der Ergebniswerte und Paramter zu jedem der Module eine zweite eigene Schnittstellendefinition enthält, welche von dem betreffenden Modul interaktiv erwartete Benutzereingaben beschreibt, zweckmäßigerweise ebenfalls einschließlich eines jeweiligen Datentyps der Benutzereingabe(n). Auf diese Weise können zu einem beliebigen Zeitpunkt während der Ausführung Benutzereingaben empfangen werden. Insbesondere kann das Computerprogramm jedoch vorteilhafterweise so ausgeführt werden, dass alle Benutzereingaben für alle Module bereits vor Beginn der Ausführung des Computerprogramms abgefragt und empfangen werden, so dass der Ablauf nicht durch Benutzerabfragen auf unbestimmte Zeit unterbrochen wird. Ein weiterer Vorteil besteht darin, dass ein und dasselbe Modul ohne inhaltliche Änderung in einer Vielzahl von verschiedenen Computerprogrammen eingesetzt werden kann. Durch die beiden Schnittstellendefinitionen (Datentypen von Ergebniswert und Parametern sowie interaktiv zu empfangenden Parametern)

Zweckmäßigerweise kann die Datenbank die Ausführungsumgebungen in Form jeweils eines Verweises und/oder eines Abbilds enthalten.

Entsprechend sind zum Übersetzen eines Computerprogrammes von einer Darstellung in eine andere Darstellung, insbesondere in eine maschinell ausführbare Darstellung, die folgenden Schritte vorgesehen:
- Bereitstellen eines Rechnerverbunds, der mindestens zwei Rechner, die miteinander über ein Netzwerk verbunden sind, mit jeweils eigenem Arbeitsspeicher pro Rechner umfasst,
- Bereitstellen einer Datenbank, die mehrere unterschiedliche Ausführungsumgebungen enthält, von denen jede ein jeweiliges ausführbares Modul umfasst, wobei jedes dieser Module jeweils eine Funktion bereitstellt (die mindestens einen Ergebniswert zurückgibt), und die dieses Modul enthaltende Ausführungsumgebung auf mindestens einem der Rechner in einem eigenen Namensraum ausführbar ist, wobei das Modul einen Betriebssystemkern des betreffenden Rechners aufruft, und diese Arbeitsumgebung einen von diesem Modul als Ergebnis der von ihm bereitgestellten Funktion ausgegebenen Wert zurückgibt, wobei die Datenbank zusätzlich zu jedem der Module eine eigene Schnittstellendefinition enthält, welche die von dem betreffenden Modul bereitgestellte Funktion beschreibt, und mit dem Netzwerk verbunden ist,
- Einlesen eines Computerprogrammes, welches mindestens a) eine erste Instruktion, die eine erste Funktion aufruft, welche einen Ergebniswert zurückgibt, und b) eine zweite Instruktion, welche eine zweite Funktion mit dem empfangenen Ergebniswert der ersten Funktion als einem Parameter aufruft, aufweist,
- Einlesen einer ersten Schnittstellendefinition eines ersten Moduls, das die erste Funktion bereitstellt, wobei die erste Schnittstellendefinition die erste Funktion beschreibt, indem sie mindestens einen Datentyp ihres Ergebniswertes enthält, aus der Datenbank,
- Einlesen einer zweiten Schnittstellendefinition eines zweiten Moduls, das die zweite Funktion bereitstellt, wobei die zweite Schnittstellendefinition die zweite Funktion beschreibt, indem sie mindestens einen Datentyp eines Parameters der zweiten Funktion enthält, aus der Datenbank und
- Vergleichen des Datentyps des Ergebniswertes der ersten Funktion mit dem Datentyp des Parameters der zweiten Funktion,
- Ermitteln von Ungleichheit der beiden Datentypen und
- Senden eines Fehlers an eine Eingabevorrichtung und/oder Abbrechen des Übersetzungsvorgangs.

Dabei können die erste Instruktion und die zweite Instruktion identisch sein, indem der Ergebniswert der ersten Funktion als Parameter der zweiten Funktion übergeben wird. Insbesondere können hier die erste Funktion und die zweite Funktion identisch sein, indem diese Funktion rekursiv aufgerufen wird.

Beim Ausführen des übersetzten Computerprogramms werden die in der übersetzten Darstellung enthaltenen Instruktionen ausgeführt und dabei vorteilhafterweise ermittelt, dass für eine der Instruktionen eine in dieser Instruktion aufgerufene Funktion durch eine der in der Datenbank enthaltenen Ausführungsumgebungen bereitgestellt wird, und daraufhin i) die betreffende Ausführungsumgebung auf einem der Rechner geladen, ii) das darin enthaltene Modul auf dem betreffenden Rechner ausgeführt und iii) der dabei von diesem Modul ausgebene Wert als Ergebniswert der durch dieses Modul bereitgestellten Funktion eingelesen.

Nach dem Einlesen des Ergebniswerts kann in einem Schritt iv) die betreffende Ausführungsumgebung entladen werden. Das Laden nach Bedarf und das Entladen nach Beendigung eines Funktionsaufrufs verringert den Energieverbauch des Rechnerverbunds und den Kostenaufwand.

In einer besonders vorteilhaften Ausführungsform werden ein Mikroskop über einen Steuerrechner mit dem Netzwerk verbunden und beim Ausführen einer der in der übersetzten Darstellung enthaltenen Instruktionen eine Steueranweisung von dem ausführenden Rechner an das Mikrosop übermittelt, insbesondere zum Auslösen einer Bildaufnahme am Mikroskop, wobei das aufgenommene Bild von dem Steuerrechner auf einen der anderen Rechner übertragen wird. Auf diese Weise kann ohne Verzögerung durch eine Benutzerinteraktion eine Bildaufnahme insbesondere wiederholt werden, wenn während der Ausführung des Computerprogramms ermittelt wird, dass ein zuvor mit dem Mikroskop aufgenommenes und in der Rechnerverbund übertragenes Bild ein vorgegebenes Kriterium nicht erfüllt. Ein solches Kriterium kann beispielsweise ein Schwellwert für ein Bildgütemaß oder für eine Anzahl von identifizierbaren Fluoreszenzmarkern sein.

Nach dem Stand der Technik muss in einem solchen Fall die Ausführung des Computerprogramms abgebrochen und nach einer erneuten, manuell auszulösenden Bildaufnahme der gesamte Ablauf wiederholt werden. Vorteilhafterweise brauchen mit der erfindungsgemäßen Ausführungsform nur die Bildaufnahme und die unmittelbar oder mittelbar von dem aufgenommenen Bild Instruktionen des Computerprogramms wiederholt zu werden.

Zweckmäßigerweise enthalten die Ausführungsumgebungen jeweils keinen von dem betreffenden Modul aufrufbaren Betriebssystemkern. Die Module werden dann vorteilhafterweise ausschließlich durch Containervirtualisierung bereitgestellt. Zudem kann es vorteilhaft sein, die in der Datenbank enthaltenen Ausführungsumgebungen zustandslos bereitzustellen.

In einer weiteren vorteilhaften Ausführungsform kann vor der Ausführung der im Computerprogramm enthaltenen Instruktionen für jede im Computerprogramm enthaltene Funktion eine voraussichtliche Rechenzeit und eine Häufigkeit ihres Aufrufs prognostiziert werden. Auf diese Weise kann der voraussichtliche Gesamtrechenzeitbedarf und die voraussichtliche Dauer der Ausführung ermittelt werden. Eine oder beide dieser Größen können dem Benutzer vor Beginn der Ausführung mit einem Bedienelement zum Abbrechen der Ausführung angezeigt werden, so dass er bei die Ausführung rechtzeitig abbrechen kann.

Die Erfindung umfasst auch einen Rechnerverbund, der zur Durchführung eines der zuvor beschriebenen Verfahren eingerichtet ist, insbesondere mit einem Mikroskop, das über einen Steuerrechner an den Rechnerverbund angeschlossen ist, wobei der Steuerrechner so eingerichtet ist, dass er eine Steueranweisung für das Mikroskop von einem der anderen Rechner empfängt und das Mikroskop entsprechend der Anweisung steuert.

Mit der Erfindung lassen sich komplexe Arbeitsabläufe (engl. "workflows") in der Mikroskopie weitgehend vereinfachen und automatisieren, ohne dass der Benutzer die Details des Ablaufs kennen muss. Der Benutzer braucht lediglich die zu untersuchende Probe im Mikroskop zu positionieren und einen Arbeitsablauf in Form eines Computerprogramms starten, das in einer Rechnerwolke ausgeführt wird. Bei Bedarf wird er daraufhin nach vorbestimmten Eingaben gefragt.

Nachfolgend wird die Erfindung anhand von Ausführungsbeispielen näher erläutert.

In den Zeichnungen zeigen:
Fig. 1 einen Rechnerverbund mit einem Mikroskop,
Fig. 2 drei in einer jeweiligen Ausführungsumgebung bereitgestellte Module und ihre Schnittstellen und
Fig. 3 ein Ablaufschema eines auf dem Rechnerverbund ausgeführten Computerprogramms.

In allen Zeichnungen tragen übereinstimmende Teile gleiche Bezugszeichen.

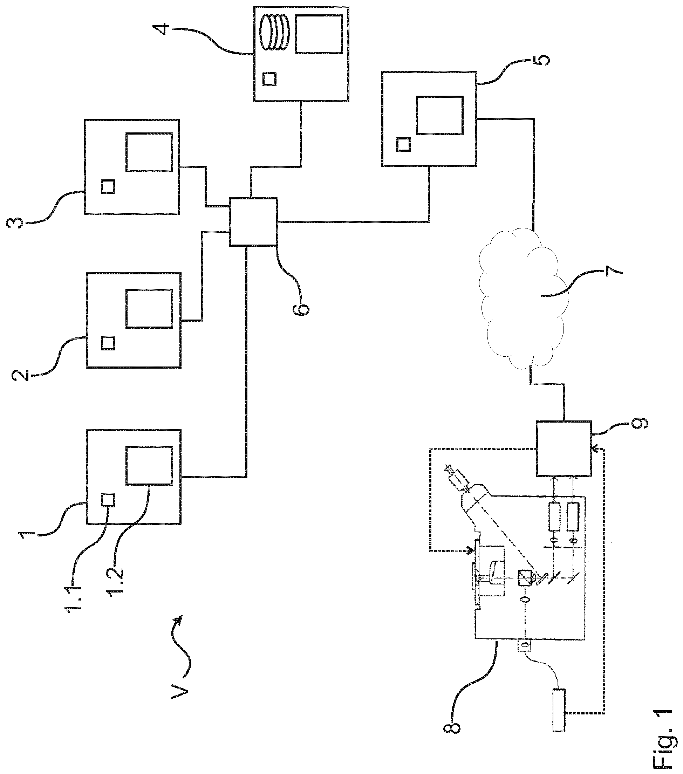

**Fig. 1** zeigt schematisch einen Rechnerverbund V in Form einer Rechnerwolke, die rein beispielhaft drei Rechner 1/2/3, einen Datenbank-Server 4 und einen Zugangspunkt-Server 5 umfasst, die untereinander über einen Ethernet-Switch 6 verbunden sind. Der Zugangspunkt-Server 5 ist aus dem Internet 7 erreichbar. Über das Internet 7 ist ein Mikroskop 8, das über einen Steuerrechner 9 verfügt, mit dem Zugangspunkt-Server 5 verbunden und darüber an dem Rechnerverbund V angebunden. Alternativ kann zwischen dem Steuerrechner 9 und dem Internet 7 ein weiterer Rechner angeordnet sein, der eine Benutzeroberfläche aufweist und eine Eingabevorrichtung bildet. So kann ein Computerprogramm insbesondere Anweisungen mit Bilddaten enthalten, die auf dem weiteren Rechner eine Anzeige dieser Bilddaten auslösen.

Jeder der Rechner 1/2/3/4/5 hat einen eigenen Prozessor sowie eigenen Arbeitsspeicher. Es handelt sich also um physische Rechner. Der Übersichtlichkeit halber sind nur der Prozessor 1.1 und der Arbeitsspeicher 1.2 des ersten Rechners 1 mit Bezugszeichen versehen. Auf jedem der Rechner 1/2/3/4/5 wird beispielsweise das Betriebssystem Linux mit Containern und Steuergruppen bereitgestellt. Zusammen bilden die Rechner 1/2/3 einen Docker-Schwarm.

In der Datenbank des Datenbank-Servers 4 ist eine Vielzahl Abbildern von Containern als Ausführungsumgebungen für eine identische Anzahl von ausführbaren Modulen enthalten, wobei jedes Modul genau eine jeweilige Funktion bereitstellt, die eine nichtnegative natürliche Zahl von Parametern entgegennimmt und am Ende ihrer Ausführung einen Ergebniswert zurückgibt. Die Datenbank enthält dabei auch für jede dieser Funktionen eine erste Schnittstellendefinition, welche die Anzahl ihrer Parameter und deren Datentypen beschreibt. Zudem enthält die Datenbank für jede der Funktionen eine zweite Schnittstellendefinition, welche eine Anzahl von dem betreffenden Modul interaktiv erwartete Benutzereingaben und deren Datentypen beschreibt. Daneben kann die Datenbank zu jeder Ausführungsumgebung auch eine Versionsangabe enthalten. Dadurch ist es möglich, unterschiedliche Versionen desselben Moduls parallel bereitzustellen. Das ernöglicht es, neue Versionen eines Moduls verfügbar zu machen, ohne dass bestehende Computerprogramme angepasst werden müssen. Zu diesem Zweck kann beim Aufruf einer Funktion eine benötigte Version der Funktion als Meta-Parameter angegeben werden.

Die Ausführungsumgebungen sind auf den Rechnern 1/2/3 in einem jeweiligen eigenen Namensraum ausführbar, wobei sie einen Betriebssystemkern des betreffenden Rechners aufrufen, da sie als Container selbst keinen Betriebssystemkern enthalten. Dazu können sie per Docker erzeugt und gestartet werden. Der Docker-Schwarm entscheidet selbsttätig, auf welchem der Rechner 1/2/3 eine zustartende Ausführungsumgebung geladen (aus ihrem Abbild erzeugt) und ausgefährt wird. In jeder Ausführungsumgebung werden die Parameter, die das enthaltene ausführbare Modul zur Erfüllung der bereitgestellten Funktion benötigt, beispielsweise als Umgebungsvariable(n) gesetzt. Das ausführbare Modul kann diese dann beispielsweise selbst als seine Parameter einlesen. Am Ende seiner Ausführung gibt es das Ergebnis der Funktion aus, beispielsweise in einer als Parameter vorgegeben Datei oder auf dem Standardausgabekanal.

Die Module können in b eliebigen (auch unterschiedlichen) Programmiersprachen geschrieben sein und beliebige Programmbibliotheken verwenden. Sie müssen sich lediglich hinsichtlich der Parameterannahme und der Ergebniswertrückgabe gemäß der Schnittstellendefinitionen verhalten. Ein anderes Abbild mit einer Fassung des Moduls kann mit geringem Aufwand in der Datenbank installiert werden. Zu diesem Zweck wird in der Datenbank

Zur Ausführung eines Computerprogramms im Rechnerverbund V empfängt der Zugangspunkt-Server 5 das Computerprogramm in maschinell ausführbarer Form, beispielsweise von dem Steuerrechner 9 oder von einem Webserver (nicht dargestellt), der insbesondere Teil des Rechnerverbundes V sein kann.

Der Benutzer kann ein Computerprogramm beispielsweise zunächst in einem Editor, beispielsweise auf dem vorgenannten weiteren Rechner oder auf dem vorgenannten Webserver, in einer anwendungsspezifischen Sprache (engl. "domain-specific language") eingeben oder von einem Massenspeicher laden. Der Editor kann das Computerprogramm beispielsweise in der anwendungsspezifischen Sprache in Textform und/oder als Ablaufdiagramm grafisch darstellen. Der Benutzer kann das Computerprogramm wahlweise in Textform oder in grafischer Form bearbeiten. Änderungen am Ablaufdiagramm werden von dem Editor automatisch in der Textform des Computerprogramms entsprechend vorgenommen. Umgekehrt werden auch Änderungen an der Textform automatisch im Ablaufdiagramm entsprechend vorgenommen. Vor dem Ausführen des Computerprogrammes wird es innerhalb des Rechnerverbunds V, beispielsweise auf dem Steuerrechner 9 oder den vorgenannten Webserver von der Darstellung in der anwendungsspezifischen Sprache in eine maschinell ausführbare Darstellung übersetzt. Dabei kann eine Zwischenübersetzung der anwendungsspezifischen Sprache in eine weitere Programmiersprache erfolgen, bevor diese in eine maschinell ausführbare Darstellung übersetzt wird.

Zum Übersetzen wird zunächst das Computerprogramm in der anwendungssperzifischen Sprache eingelesen. Werden eine erste Instruktion, die eine erste Funktion aufruft, welche einen Ergebniswert zurückgibt, und eine zweite Instruktion, welche eine zweite Funktion mit dem empfangenen Ergebniswert der ersten Funktion als einem Parameter aufruft, identifiziert, werden die Schnittstellendefinitionen der die beiden Funktionen bereitstellenden Module aus der Datenbank eingelesen und die darin beschriebenen Datentypen des Ergebniswerts der ersten Funktion und des betreffenden Parameters der zweiten Funktion verglichen. Wird Ungleichheit festgestellt, erfolgt zunächst eine Prüfung, ob es sich in beiden Fällen um Bilddatentypen handelt. Wenn ja, wird in der übersetzten Darstellung des Computerprogramms eine Instruktion eingefügt, welche eine Funktion zur Konversion des Ergebniswerts in den Bilddatentyp des betreffenden Parameters aufruft. Dieser Funktjonsaufruf kann insbesondere wie andere Funktionsaufrufe des Computerprogramms durch Ausführen eines in der Datenbank in einer Ausführungsumgebung enthaltenen Moduls erfolgen. Anstelle eines solchen impliziten Typkonversion durch einen transparenten Funktionsaufruf könnte das Computerprogramm also einen ausdrücklichen Aufruf derselben Funktion enthalten.

Handelt es sich bei den als unterschiedlich ermittelten Datentypen nicht um zwei Bilddatentypen, wird ein Fehler an die Eingabevorrichtung des Benutzers, in diesem Beispiel also an den vorgenannten weiteren Rechner oder den vorgenannten Webserver, dort insbesondere an den Editor, gesendet und/oder der Übersetzungsvorgang abgebrochen. Der Editor kann den Benutzer visuell auf die ungleichen Datentypen hinweisen, so dass dieser den Programmfehler beheben kann, ohne zuvor zeitaufwendig das Computerprogramm bis zu der fehlerhaften Anweisung ausführen zu müssen.

Der Rechnerverbund V wird so bereitgestellt, dass er während der Ausführung eines Computerprogramms das Laden aller dazu benötigten Ausführungsumgebungen und die Ausführung aller darin enthaltenen Module einschließlich der ihnen übergebenen Parameter und insbesondere deren reguläre Beendigung einschließlich des betreffenden Ergebniswerts und der benötigten Rechenzeit protokolliert, beispielsweise in der Datenbank des Datenbank-Servers 4. Dadurch kann nach einem Systemstopp, sei es durch einen Absturz oder durch reguläre Wartung, die Ausführung mit dem letzten unvollständig oder nicht ausgeführten Modul wiederaufgenommen werden, ohne dass bereits erfolgreiche Funktionsaufrufe wiederholt werden müssen. Das gilt auch, wenn mehrere Computerprogramme parallel ausgeführt werden. Für jedes auf dem Rechnerverbund auszuführende Computerprogramm erfolgt die Protokollierung separat.

Die protokolliertentatsächlich benötigten Rechenzeiten können insbesondere zum Prognostizieren der voraussichtlichen Rechenzeiten verwendet werden.

Vorteilhafterweise kann ein bereits einmal ausgeführtes Computerprogramm nach einer nur teilweisen Änderung seiner Anweisungen oder seiner Eingabe-Daten mit geringerem Zeitaufwand erneut ausgeführt werden. Zu diesem Zweck wird anhand des Ausführungsprotokolls ermittelt, welche Instruktionen sowohl im Computerprogramm als auch in allen von ihnen jeweils aufgerufenen Funktionsmodulen also auch in den von ihnen verwendeten Parametern änderungsfrei geblieben sind. Da auch außerhalb des Computerprogramms liegende Dateien als Parameter an Funktionen des Programms übergeben werden können (beispielsweise durch einen Dateipfad oder eine URL-Angabe), wird auch insofern Änderungsfreiheit ermittelt. Nur diejenigen Instuktionen, die als nicht änderungsfrei ermittelt wurden, werden bei einer erneuten Ausführung des Computerprogramms tatsächlich ausgeführt. Für alle als änderungsfrei ermittelten Instruktionen wird stattdessen der Rückgabewert des vorherigen Aufrufs aus der Datenbank geladen.

Eine oder mehrere der von einem Computerprogramm aufgerufenen Funktionen können an dem Mikroskop 8 eine Bildaufnahme auslösen, indem der Steuerrechner 9 über das Internet 7 ein entsprechender Befehl übermittelt wird. Der Steuerrechner sendet die im Rahmen der Bildaufnahme ermittelten Bilddaten dann über das Internet 7 an den Rechnerverbund V. Dort können Sie beispielsweise auf dem Datenbank-Server 4 gespeichert werden. Das die betreffende Funktion bereitstellende Modul gibt nach vollständigem Empfang der Bilddaten als Ergebniswert ein Objekt zurück, das die Bilddaten repräsentiert und in einem späteren Aufruf einer bildverarbeitenden Funktion als Parameter angegeben werden kann.

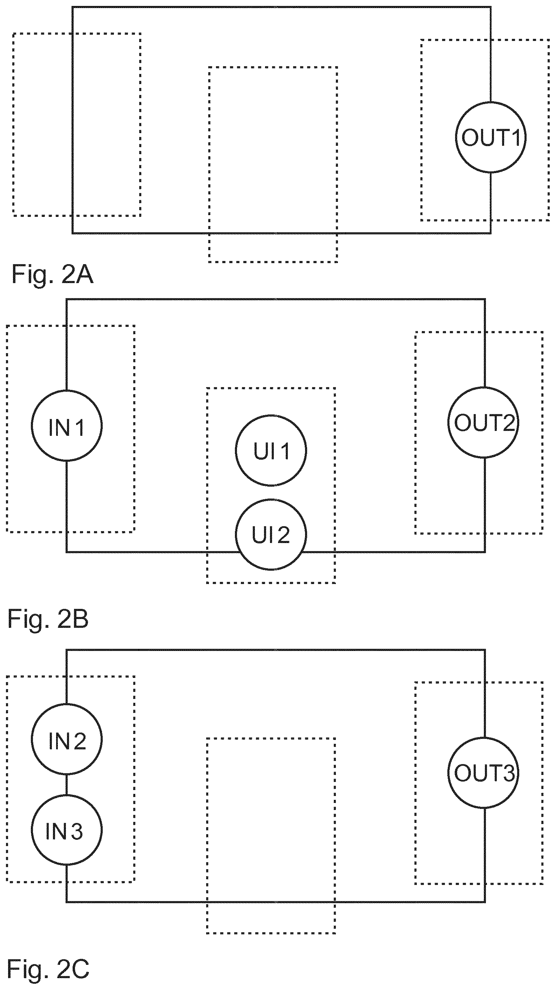

**Fig. 2** zeigt schematisch drei verschiedene in Ausführungsumgebungen enthaltene Module, deren Abbilder und Schnittstellendefinitionen beispielsweise in der Datenbank gemäß Fig. 1 enthalten sind.

In Teilfig. 2A ist ein Modul mit einer Funktion "FunkA" dargestellt, das genau keinen Eingabe-Parameter entgegennimmt, keine interaktive Benutzereingabe erfordet, aber genau einen Ergebniswert OUT1, beispielsweise einen Bilddatenobjekt-Typ zurückgibt. Die durch das Modul bereitgestellte Funktion löst beispielsweise in einem angebundenen Mikroskop 8 eine Bildaufnahme aus und gibt ein das aufgenommene Bild als Ergebniswert zurück.

In Teilfig. 2B ist ein Modul mit einer Funktion "FunkB" dargestellt, das genau einen Parameter IN1, beispielsweise wiederum einen Bilddatenobjekt-Typ, entgegennimmt, zwei interaktive Benutzereingaben erfordert und genau einen Ergebniswert OUT2, beispielsweise wiederum einen Bilddatenobjekt-Typ, zurückgibt. Die Benutzereingaben müssen beispielsweise vom Typ vom Typ Gleitkommazahl und Farbwert sein. Die durch das Modul bereitgestellte Funktion führt beispielsweise in den empfangenen Bilddaten eine Segmentierung anhand der beiden vom Benutzer eingegebenen Zahlenwerte durch, die beispielsweise einen Schwellwert und ein Farbstoff vorgeben. Die erkannten Segmente werden als Ergebniswert OUT2 vom Datentyp Objektliste zurückgegeben.

In Teilfig. 2C ist ein Modul mit einer Funktion "FunkC" dargestellt, das genau zwei Parameter IN2, beispielsweise einen Bilddatenobjekt-Typ, und IN3, beispielsweise einen Objektlisten-Typ, entgegennimmt und keine interaktive Benutzereingaben erfordert, jedoch genau einen Ergebniswert OUT3, hier beispielsweise vom Typ Ganzzahl, zurückgibt. Die durch das Modul bereitgestellte Funktion führt beispielsweise für jedes in der entgegengenommenen Objektliste IN2 enthaltene Objekt, das ein Bildsegment repräsentiert, eine Klassifizierung anhand der Bilddaten in diesem Segment dar, wozu die Bilddaten aus dem entgegengenommenen Bild IN2 verwendet werden. Die Funktion gibt dann eine Objektliste OUT3 zurück, welche zu jedem in IN3 enthaltenen Segment eine Klassenangabe enthält.

Ein Computerprogramm kann mit diesem drei Modulen beispielsweise folgendermaßen aufgebaut sein:
img:=FunkA()
sgm:=FunkB(img)
cls:=FunkC(img,sgm)

Dabei sind "img", "sgm" und "cls" Variablenbezeichner, denen Speicherplätze zugeordnet sind. Die zurückgegebenen Ergebniswerte werden in den zugehörigen Speicherplätzen gespeichert und bei Verwendung einer Variablen als Funktionsparameter wieder ausgelesen und der betreffenden Funktion übergeben.

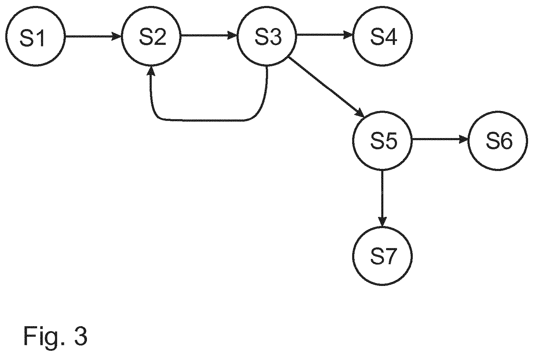

**Fig. 3** zeigt schematisch den Ablauf eines übersetzten Computerprogramms in Schritten S1-S7, wobei jeder Schritt einem Aufruf einer Funktion durch Starten eines in der Datenbank in einer jeweiligen Ausführungsumgebung enthaltenen ausführbaren Moduls. Dabei enthält das Computerprogramm mehrere Instruktionen, die jeweils eine Bedingung in Abhängigkeit eines zuvor ermittelten Ergebniswerts einer der genannten Funktionen umfassen. Bei der Ausführung des Programms wird bei erreichen einer bedingten Instruktion, beispielsweise einem bedingten Sprung, die Bedingung geprüft und die bedingte Instruktion nur dann ausgeführt, wenn die Prüfung ergibt, dass die Bedingung erfüllt ist.

Auf diese Weise können mit mit bedingten Sprüngen nach Schritt S3 eine Ausführungsschleife oder alternativ eine Verzweigung bereitgestellt werden. Entsprechend kann durch einen bedingten Sprung nach Schritt S5 eine weitere Verzweigung erreicht werden.

### Bezugszeichenliste

- V: Rechnerverbund
- 1: Erster Rechner
- 1.1: Prozessor
- 1.2: Arbeitsspeicher
- 2: Zweiter Rechner
- 3: Dritter Rechner
- 4: Datenbank-Server
- 5: Zugangspunkt-Server
- 6: Switch
- 7: Internet
- 8: Mikroskop
- 9: Steuerrechner

## Patentansprüche

1. Verfahren zum Automatisieren eines komplexen Arbeitsablaufs in der Mikroskopie durch Ausführen eines Computerprogramms in einem Rechnerverbund zum Steuern eines Mikroskops, umfassend die folgenden Schritte:
- Bereitstellen des Rechnerverbunds, der mindestens zwei Rechner, die miteinander über ein Netzwerk verbunden sind, mit jeweils eigenem Arbeitsspeicher pro Rechner umfasst,
- Positionieren einer zu untersuchenden Probe in dem Mikroskop, das über einen Steuerrechner mit dem Rechnerverbund angeschlossen ist, durch einen Benutzer,
- Bereitstellen von mindestens drei unterschiedlichen Abbildern von Ausführungsumgebungen, von denen jede ein jeweiliges ausführbares Modul umfasst, wobei jedes dieser Module jeweils eine Funktion bereitstellt, und die dieses Modul enthaltende Ausführungsumgebung auf mindestens einem der Rechner in einem eigenen Namensraum ausführbar ist, wobei das Modul einen Betriebssystemkern des betreffenden Rechners aufruft, und diese Arbeitsumgebung einen von diesem Modul als Ergebnis der von ihm bereitgestellten Funktion ausgegebenen Wert zurückgibt,
- Empfangen des Computerprogrammes, welches mindestens a) eine erste Instruktion, die eine erste Funktion aufruft, welche einen ersten Ergebniswert zurückgibt, b) eine zweite Instruktion, die eine zweite Funktion aufruft, welche einen zweiten Ergebniswert zurückgibt, und c) eine dritte Instruktion, welche eine dritte Funktion mit dem ersten Ergebniswert als einem ersten Parameter und mit dem zweiten Ergebniswert als einem zweiten Parameter aufruft, aufweist, durch den Rechnerverbund,
- Starten des Arbeitsablaufs in Form des Computerprogramms durch den Benutzer,
- Starten einer der bereitgestellten Ausführungsumgebungen mit dem die erste Funktion bereitstellenden Modul und Empfangen deren Rückgabewerts als ersten Ergebniswert durch den Rechnerverbund,
- Starten einer der bereitgestellten Ausführungsumgebungen mit dem die zweite Funktion bereitstellenden Modul und Empfangen deren Rückgabewerts als zweiten Ergebniswert durch den Rechnerverbund,
- Starten einer der bereitgestellten Ausführungsumgebungen mit dem die dritte Funktion bereitstellenden Modul, wobei dem Modul der erste Ergebniswert und der zweite Ergebniswert als Parameter übergeben werden durch den Rechnerverbund.

2. Verfahren nach dem vorangehenden Anspruch, zusätzlich umfassend:
- Bereitstellen einer Datenbank, die die Ausführungsumgebungen enthält, wobei die Datenbank zusätzlich zu jedem der Module eine eigene Schnittstellendefinition enthält, welche die von dem betreffenden Modul bereitgestellte Funktion beschreibt, und mit dem Netzwerk verbunden ist.

3. Verfahren nach dem vorangehenden Anspruch, zusätzlich umfassend:
- Bereitstellen der Datenbank, die die Ausführungsumgebungen enthält, derart, dass die Datenbank zusätzlich zu jedem der Module eine zweite eigene Schnittstellendefinition enthält, welche von dem betreffenden Modul interaktiv erwartete Benutzereingaben beschreibt.

4. Verfahren nach einem der vorangehenden Ansprüche, wobei beim Ausführen eine Steueranweisung von dem ausführenden Rechner an das Mikroskop übermittelt wird, insbesondere zum Auslösen einer Bildaufnahme am Mikroskop, wobei das aufgenommene Bild von dem Steuerrechner auf einen der anderen Rechner übertragen wird.

5. Verfahren nach einem der vorhergehenden Ansprüche, wobei die Ausführungsumgebungen jeweils keinen von dem betreffenden Modul aufrufbaren Betriebssystemkern enthalten.

6. Verfahren nach einem der Ansprüche 2 bis 5, wobei die Datenbank die Ausführungsumgebungen in Form jeweils eines Verweises und/oder eines Abbilds enthält.

7. Verfahren nach einem der Ansprüche 2 bis 6, wobei die in der Datenbank enthaltenen Schnittstellendefinitionen der von den Modulen bereitgestellten Funktionen die Datentypen der Eingangsparameter und den Datentyp des Ergebniswerts der jeweiligen Funktion enthalten.

8. Verfahren nach einem der Ansprüche 2 bis 7, wobei die in der Datenbank enthaltenen Ausführungsumgebungen zustandslos sind.

9. Verfahren nach einem der Ansprüche 1 bis 8, wobei vor der Ausführung der im Computerprogramm enthaltenen Instruktionen für jede im Computerprogramm enthaltene Funktion eine voraussichtliche Rechenzeit und eine Häufigkeit ihres Aufrufs prognostiziert wird.

10. Verfahren nach einem der Ansprüche 3 bis 9, wobei alle interaktiven Benutzereingaben für alle Module bereits vor Beginn der Ausführung des Computerprogramms abgefragt und empfangen werden.

11. Rechnerverbund, eingerichtet zur Durchführung eines Verfahrens nach einem der vorangehenden Ansprüche, insbesondere mit einem Mikroskop, das über einen Steuerrechner an den Rechnerverbund angeschlossen ist, wobei der Steuerrechner so eingerichtet ist, dass er eine Steueranweisung für das Mikroskop von einem der anderen Rechner empfängt und das Mikroskop entsprechend der Anweisung steuert.

## Claims

1. Method for automating a complex workflow in microscopy by executing a computer program in a computer network for controlling a microscope, comprising the following steps:
- providing the computer network that comprises at least two computers connected to one another via a network, each having its own main memory per computer,
- a user positioning a sample to be examined in the microscope, which is connected to the computer network via a control computer,
- providing at least three different images of execution environments, each of which comprises a respective executable module, wherein each of these modules provides a respective function, and the execution environment containing this module is executable on at least one of the computers in a namespace of its own, wherein the module calls an operating system core of the relevant computer, and this work environment returns a value that is output by this module as the result of the function provided thereby,
- the computer network receiving the computer program, which has at least a) a first instruction, which calls a first function that returns a first result value, b) a second instruction, which calls a second function that returns a second result value, and c) a third instruction, which calls a third function with the first result value as a first parameter and with the second result value as a second parameter,
- the user starting the workflow in the form of the computer program,
- the computer network starting one of the provided execution environments with the module providing the first function, and receiving the return value thereof as first result value,
- the computer network starting one of the provided execution environments with the module providing the second function, and receiving the return value thereof as second result value,
- the computer network starting one of the provided execution environments with the module providing the third function, wherein the first result value and the second result value are transferred to the module as parameters.

2. Method according to the preceding claim, additionally comprising:
- providing a database that contains the execution environments, wherein the database contains, in addition to each of the modules, an interface definition of its own that describes the function provided by the relevant module, and is connected to the network.

3. Method according to the preceding claim, additionally comprising:
- providing the database that contains the execution environments such that the database contains, in addition to each of the modules, a second interface definition of its own that describes user inputs interactively expected by the relevant module.

4. Method according to one of the preceding claims, wherein, when it is executed, a control instruction is transferred from the executing computer to the microscope, in particular for triggering an image acquisition on the microscope, the recorded image being transmitted from the control computer to one of the other computers.

5. Method according to one of the preceding claims, wherein none of the execution environments contain an operating system core callable by the relevant module.

6. Method according to one of Claims 2 to 5, wherein the database contains the execution environments in the form of a respective reference and/or image.

7. Method according to one of Claims 2 to 6, wherein the interface definitions, contained in the database, of the functions provided by the modules contain the data types of the input parameters and the data type of the result value of the respective function.

8. Method according to one of Claims 2 to 7, wherein the execution environments contained in the database are stateless.

9. Method according to one of Claims 1 to 8, wherein before the instructions contained in the computer program are executed, a probable computing time and a frequency of being called is forecast for each function contained in the computer program.

10. Method according to one of Claims 3 to 9, wherein all interactive user inputs for all modules are queried and received before execution of the computer program actually starts.

11. Computer network configured to perform a method according to one of the preceding claims, in particular having a microscope connected to the computer network via a control computer, wherein the control computer is configured such that it receives a control instruction for the microscope from one of the other computers and controls the microscope in accordance with the instruction.

## Revendications

1. Procédé d'automatisation d'un processus de travail complexe en microscopie par l'exécution d'un programme informatique dans un réseau informatique pour commander un microscope, comprenant les étapes suivantes :
- fourniture du réseau informatique, qui comprend au moins deux ordinateurs, qui sont connectés l'un à l'autre par un réseau, avec chacun une mémoire de travail propre par ordinateur,
- positionnement par un utilisateur d'un échantillon à examiner dans le microscope, qui est raccordé au réseau informatique par un ordinateur de commande,
- fourniture d'au moins deux représentations différentes d'environnements d'exécution, dont chacun comprend un module respectif exécutable, chacun desdits modules fournissant respectivement une fonction, et l'environnement d'exécution contenant ledit module pouvant être exécuté sur au moins un des ordinateurs dans un espace nominatif propre, le module appelant un noyau de système d'exploitation de l'ordinateur concerné, et ledit environnement de travail renvoyant une valeur émise par ledit module en tant que résultat de la fonction fourni par celui-ci,
- réception du programme informatique, lequel présente au moins a) une première instruction, qui appelle une première fonction, laquelle renvoie une première valeur de résultat, b) une deuxième instruction, qui appelle une deuxième fonction, laquelle renvoie une deuxième valeur de résultat, et c) une troisième instruction, laquelle appelle une troisième fonction avec la première valeur de résultat en tant qu'un premier paramètre et avec la deuxième valeur de résultat en tant qu'un deuxième paramètre, par le réseau informatique,
- démarrage du processus de travail sous la forme du programme informatique par l'utilisateur,
- démarrage d'un des environnements d'exécution fournis avec le module fournissant la première fonction et réception de leurs valeurs de retour en tant que la première valeur de résultat par le réseau informatique,
- démarrage d'un des environnements d'exécution fournis avec le module fournissant la deuxième fonction et réception de leur valeur de retour en tant que deuxième valeur de résultat par le réseau informatique,
- démarrage d'un des environnements d'exécution fournis avec le module fournissant la troisième fonction, la première valeur de résultat et la deuxième valeur de résultat étant transférées en tant que paramètres au module par le réseau informatique.

2. Procédé selon la revendication précédente, comprenant en supplément :
- fourniture d'une base de données, qui contient les environnements d'exécution, la base de données contenant en supplément pour chacun des modules une définition d'interface propre, laquelle décrit la fonction fournie par le module concerné, et qui est connectée au réseau.

3. Procédé selon la revendication précédente, comprenant en supplément :
- fourniture de la base de données, qui contient les environnements d'exécution, de telle manière que la base de données contient en supplément pour chacun des modules une deuxième définition d'interface propre, qui décrit des entrées d'utilisateur attendues de manière interactive par le module concerné.

4. Procédé selon l'une des revendications précédentes, une instruction de commande étant transmise par l'ordinateur d'exécution au microscope lors de l'exécution, en particulier pour déclencher une prise d'image sur le microscope, l'image prise étant transférée par l'ordinateur de commande sur un des autres ordinateurs.

5. Procédé selon l'une des revendications précédentes, les environnements d'exécution ne contenant chacun aucun noyau de système d'exploitation pouvant être appelé par le module concerné.

6. Procédé selon l'une des revendications 2 à 5, la base de données contenant les environnements d'exécution sous la forme respectivement d'un renvoi et/ou d'une représentation.

7. Procédé selon l'une des revendications 2 à 6, les définitions d'interface contenues dans la base de données des fonctions fournies par les modules contenant les types de données des paramètres d'entrée et le type de données de la valeur de résultat de la fonction respective.

8. Procédé selon l'une des revendications 2 à 7, les environnements d'exécution contenus dans la base de données étant sans état.

9. Procédé selon l'une des revendications 1 à 8, un temps de calcul prévisible et une fréquence de leur appel étant prévus avant l'exécution des instructions contenues dans le programme informatique pour chaque fonction contenue dans le programme informatique.

10. Procédé selon l'une des revendications 3 à 9, toutes les entrées d'utilisateur interactives pour tous les modules étant consultées et reçues déjà avant le début de l'exécution du programme informatique.

11. Réseau informatique mis au point pour la mise en œuvre d'un procédé selon l'une des revendications précédentes, en particulier avec un microscope, qui est raccordé au réseau informatique par un ordinateur de commande, l'ordinateur de commande étant mis au point de telle sorte qu'il reçoit une instruction de commande pour le microscope d'un des autres ordinateurs et commande le microscope conformément à l'instruction.
